(19) **Europäisches Patentamt / European Patent Office / Office européen des brevets**

(11) **EP 3 601 862 B1**

(12) **FASCICULE DE BREVET EUROPEEN**

(45) Date de publication et mention de la délivrance du brevet:
**11.05.2022 Bulletin 2022/19**

(21) Numéro de dépôt: **18709605.2**

(22) Date de dépôt: **13.03.2018**

(51) Classification Internationale des Brevets (IPC):
*F16L 11/08* *(2006.01)*

(52) Classification Coopérative des Brevets (CPC):
**F16L 11/083**

(86) Numéro de dépôt international:
**PCT/EP2018/056143**

(87) Numéro de publication internationale:
**WO 2018/177735 (04.10.2018 Gazette 2018/40)**

(54) **CONDUITE FLEXIBLE AVEC NAPPES D'ARMURES METALLIQUES ET NAPPES D'ARMURES COMPOSITES**

FLEXIBLES ROHR MIT SCHICHTEN AUS METALLPANZERUNG UND SCHICHTEN AUS VERBUNDPANZERUNG

FLEXIBLE PIPE WITH LAYERS OF METAL ARMOUR AND LAYERS OF COMPOSITE ARMOUR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2017 FR 1752748**

(43) Date de publication de la demande:
**05.02.2020 Bulletin 2020/06**

(73) Titulaires:
• **IFP Energies nouvelles**
  **92852 Rueil-Malmaison (FR)**
• **Technip France**
  **92400 Courbevoie (FR)**

(72) Inventeurs:
• **LE CORRE, Vincent**
  **38540 Saint-Just-Chaleyssin (FR)**
• **MARTINEZ, Michael**
  **69360 Saint Syphorien d'Ozon (FR)**
• **MAURICE, Julien**
  **76480 Duclair (FR)**
• **DAMIENS, Alexandre**
  **76560 Berville-en-Caux (FR)**
• **FELIX-HENRY, Antoine**
  **76000 Rouen (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 1 459 003    WO-A1-2012/006998
US-A1- 2015 027 580

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne une conduite tubulaire flexible pour le transport de fluide pétrolier utilisée dans le domaine de l'exploitation pétrolière en mer.

Les conduites flexibles visées par la présente invention sont formées d'un ensemble de différentes couches concentriques et superposées, et sont dites de type non lié (« unbonded » en anglais) car ces couches présentent une certaine liberté de déplacement les unes par rapport aux autres lors d'un effort de flexion des conduites flexibles. Ces conduites flexibles satisfont entre autres aux recommandations des documents normatifs API 17J « Specification for Unbonded Flexible Pipe » (4ème édition, Mai 2014) et API 17B « Recommended Practice for Flexible Pipe » (5ème édition, Mai 2014) publiés par l'American Petroleum Institute ainsi qu'au document normatif DNV-OS-C501 « Composite Components » (Novembre 2013) publié par le Det Norske Veritas. Les couches constitutives des conduites flexibles comprennent notamment des gaines polymériques assurant généralement une fonction d'étanchéité, et des couches de renfort destinées à la reprise des efforts mécaniques et formées par des enroulements de feuillard, de fils métalliques, de bandes diverses ou de profilés en matériaux composites.

Ces conduites flexibles sont notamment utilisées pour transporter des hydrocarbures de type pétrole ou gaz depuis un équipement sous-marin situé sur le fond marin, par exemple une tête de puits, jusqu'à une unité flottante de production située à la surface. De telles conduites peuvent être déployées à grande profondeur, couramment à plus de 2000m de profondeur, et elles doivent donc être capables de résister à une pression hydrostatique de plusieurs centaines de bar. En outre elle doivent aussi pouvoir résister à la pression très élevée des hydrocarbures transportés, cette pression pouvant elle aussi être de plusieurs centaines de bar.

Lorsque la conduite flexible est en service, elle peut être soumise à de fortes charges statiques et dynamiques, ce qui peut engendrer un phénomène de fatigue. Les chargements les plus sévères sont généralement observés dans la partie supérieure des conduites montantes (« risers » en langue anglaise) reliant le fond marin à la surface. En effet, dans cette zone, la conduite flexible est soumise à une forte contrainte statique en tension liée au poids de la conduite, à laquelle s'additionnent des contraintes dynamiques en tension et en flexion transverse liées aux mouvements de l'unité flottante de production sous l'effet de la houle et des vagues. S'agissant de la partie de la conduite flexible s'étendant sur le fond marin ( « flowlines » en langue anglaise), les charges appliquées sont essentiellement statiques.

Les conduites flexibles de type non lié les plus utilisées dans l'industrie pétrolière offshore comprennent généralement, de l'intérieur vers l'extérieur, une carcasse interne constituée d'un feuillard en acier inoxydable profilé et enroulé hélicoïdalement à pas court en spires agrafées les unes aux autres, ladite carcasse interne servant principalement à empêcher l'écrasement de la conduite flexible sous l'effet de la pression externe, une gaine interne d'étanchéité en polymère, une voûte de pression constituée d'au moins un fil métallique de forme agrafé et enroulé hélicoïdalement à pas court, ladite voûte de pression servant à reprendre les efforts radiaux liés à la pression interne, des nappes d'armures de traction formées d'enroulements hélicoïdaux à pas long de fils métalliques ou composites, lesdites nappes d'armures de traction étant destinées à reprendre les efforts longitudinaux que subit la conduite flexible, et enfin une gaine externe d'étanchéité destinée à protéger de l'eau de mer les couches de renfort. Dans la présente demande, on entend par enroulement à pas court tout enroulement ayant un angle d'hélice dont la valeur absolue est proche de 90 degrés, en pratique compris entre 70 degrés et 90 degrés par rapport à l'axe longitudinal de la conduite flexible. Le terme enroulement à pas long désigne quant à lui tout enroulement dont l'angle d'hélice est inférieur ou égal, en valeur absolue, à 55 degrés par rapport à l'axe longitudinal de la conduite flexible.

La carcasse interne permet à la conduite flexible d'avoir une résistance à l'écrasement (« collapse » en anglais) suffisante pour lui permettre de résister à de fortes pressions externes, notamment la pression hydrostatique lorsque la conduite flexible est immergée à grande profondeur (1000m, voire 2000m, ou plus), ou encore les pressions externes de contact subies pendant les opérations de manutention et d'installation en mer. Une conduite flexible comportant une carcasse interne est dite à passage non lisse (« rough bore » en anglais) car l'élément le plus intérieur est la carcasse interne qui forme un passage non lisse en raison des déjoints entre les spires métalliques du feuillard agrafé.

La voûte de pression a pour fonction principale de permettre à la gaine interne d'étanchéité de résister, sans éclater, à la pression exercée par le fluide pétrolier transporté par la conduite, la face externe de la gaine interne d'étanchéité prenant appui contre la face interne de la voûte de pression. La voûte de pression contribue aussi à améliorer la résistance à l'écrasement de la carcasse interne, notamment car elle limite les possibilités de déformation de la carcasse interne sous l'effet de la pression hydrostatique.

La fonction principale des nappes d'armures de traction est de reprendre les efforts longitudinaux, notamment ceux liés au poids pendu de la conduite flexible lorsque celle-ci est installée sur le fond marin à partir d'un bateau de pose situé à la surface. Dans le cas d'une conduite montante (« riser » en anglais) reliant de façon permanente une installation posée sur le fond marin à un équipement flottant à la surface, ces efforts longitudinaux liés au poids pendu sont exercés en permanence. Lorsque la conduite est immergée à grande profondeur, les efforts longitudinaux liés au poids pendu lors de l'installation et/ou en service peuvent atteindre plusieurs centaines de tonnes.

Les nappes d'armures de traction sont généralement réalisées en métal ou en matière composite. Les armures de traction métalliques utilisées traditionnellement pour le renforcement axial des conduites flexibles posent un problème de poids par grande profondeur. En effet, selon l'application visée, il existe une profondeur au-delà de laquelle, l'augmentation de la section des armures en acier augmente le poids propre de la ligne plus qu'elle n'augmente la résistance axiale. Le chargement en tête du riser en production ou de la flowline à l'installation dépasse alors sa capacité. L'installation de la ligne devient alors impossible du fait que le poids pendu est supérieur à la capacité limite de reprise des efforts des équipements de pose.

Depuis quelques années, des travaux sont menés pour remplacer ces profilés métalliques par des profilés en matériaux composites qui ont l'avantage d'avoir une densité, donc une masse, beaucoup plus faible que les métaux. En revanche, les armures de traction composites ont une résistance en compression plus faible que les armures de traction métalliques, ce qui pose un problème pour les chargements au fond dominés par la pression externe.

Dans le but de limiter la masse des nappes d'armures de traction, et a fortiori la masse de la conduite flexible, la demande de brevet WO 2012/006998 décrit la conception d'un élément de renfort mécanique d'une conduite flexible comprenant au moins deux nappes d'armures de traction d'un premier matériau (par exemple un métal), au moins deux nappes d'armures de traction d'un deuxième matériau (par exemple une matière composite) et une couche séparant les nappes d'armures de matériau différent. Toutefois, les nappes d'armures de traction étant réalisées dans des matériaux différents, les amures de traction peuvent être soumises à des compressions importantes, ce qui n'est pas compatible avec les armures de traction composites.

La demande de brevet EP 1459003 prévoit l'introduction d'un élément intermédiaire disposé entre les armures de traction pour limiter le déplacement transverse des armures et ainsi pour limiter la déformation par flambage des armures de traction. Cette solution ne donne pas complètement satisfaction, notamment en termes de masse de la conduite flexible. La demande de brevet US 2015027580 A1 décrit également une conduite flexible comprenant des moyens de séparation assurant un jeu axial et radial de nappes d'armures de tractions composites, mais ne dévoile pas de combinaison de nappes d'armures de traction composites positionnées à l'extérieure de nappes d'armures de traction métalliques.

Pour pallier ces inconvénients, la présente invention concerne une conduite flexible comportant un élément de renfort mécanique et une gaine de pression. L'élément de renfort mécanique comprend au moins une nappe d'armures de traction métalliques et au moins une nappe d'armures de traction composites. La nappe d'armures de traction composites est disposée à l'extérieur de la nappe d'armures de traction métalliques. De plus, des moyens de séparation sont prévus pour séparer les armures de traction composites, en maintenant un jeu radial et un jeu circonférentiel pour les armures de traction composites. Ces jeux permettent aux armures de traction composites de se déplacer radialement sous chargement de compression axiale de la conduite flexible. Ainsi, la nappe d'armures de traction composites est libre de s'étendre radialement de manière à compenser la réduction axiale de la conduite sous l'effet de la pression externe. En conséquence, les contraintes de compression axiale sont minimisées dans les armures de traction composites. Par ailleurs, la nappe d'armures de traction composites participe à la reprise des charges axiales de tension. Ainsi, les nappes d'armures de traction métalliques sont utilisées pour la reprise des efforts de compression au fond, dominés par les fortes pressions, et les nappes d'armures de traction composites sont utilisées pour compléter la reprise d'effort de tension en tête de la conduite.

**Le dispositif selon l'invention**

La présente invention concerne une conduite flexible pour transporter un effluent pétrolier, ladite conduite comportant au moins un élément de renfort mécanique et une gaine de pression, ledit élément de renfort mécanique étant disposé à l'extérieur de ladite gaine de pression, ledit élément de renfort mécanique comprenant au moins une nappe d'armures de traction métalliques et au moins une nappe d'armures de traction composites, ladite nappe d'amures de traction composites étant disposée à l'extérieur de ladite nappe d'armures de traction métalliques. Des moyens de séparation séparent lesdites armures de traction composites, lesdits moyens de séparation assurant un jeu radial et un jeu circonférentiel pour lesdites armures de traction composites.

Selon un mode de réalisation de l'invention, ledit jeu radial $J_r$ desdites armures de traction composites est

$$J_r \geq a_c \cdot \left( \sqrt{1 - \frac{1 - \left(1 + \frac{\Delta L}{L_0}\right)^2}{\tan^2 \alpha_c}} - 1 \right)$$

déterminé au fonction d'une équation du type :                    avec $a_c$ le rayon moyen de ladite armure de traction composite (7), $\frac{\Delta L}{L_0}$ le taux de contraction de ladite conduite sous le chargement de la pression externe, et $\alpha_c$ l'angle d'armage desdites armures de traction composites.

Avantageusement, l'angle d'armage de ladite nappe d'armures de traction composites est inférieur ou égal à 25 degrés, de préférence compris entre 10 et 25 degrés.

De préférence, l'angle d'armage de ladite nappe d'armures de traction métalliques est compris entre 25 et 55 degrés, de préférence compris entre 30 et 55 degrés.

Selon une option de réalisation, lesdites armures de traction composites sont dimensionnées pour un partage des charges axiales entre lesdites nappes d'armures métalliques et composites.

Conformément à une mise en œuvre de l'invention, le nombre d'armures de traction composites constituant ladite nappe d'armures de traction composites est contraint par la section, l'angle d'armage et le matériau desdites armures de traction composites, ainsi que par le nombre, la section, l'angle d'armage et le matériau desdites armures de traction métalliques.

Selon une caractéristique, le nombre $n_c$ d'armures de traction composites constituant ladite nappe d'amures de traction composites est défini par une formule du type :

$$n_c > \frac{1}{S_c} \cdot \frac{1}{E_c \cdot \cos^3 \alpha_c} \cdot \max\left\{ F_{TOT} \cdot \frac{E_a \cdot \cos^2 \alpha_a}{sf_a \cdot \sigma_a^Y} - K_a \;;\; F_{TOT} \cdot \frac{E_c \cdot \cos^2 \alpha_c}{sf_c \cdot \sigma_c^Y - E_c \cdot \frac{h_c}{a_c} \sin^2 \alpha_c} - K_a \right\}$$

avec $K_i = E_i \cdot n_i \cdot S_i \cdot \cos^3 \alpha_i$, i étant l'indice associé à la nappe d'armures de traction considérée : i correspondant à a pour métallique ou c pour composite, $E_i$ le module d'Young du matériau i, $S_i$ la section de l'armure de traction du matériau i, $\alpha_i$ l'angle d'armage de l'armure de traction du matériau i, $F_{TOT}$ l'effort axial total vu par la conduite, $sf_i$ un facteur de sécurité pour la nappe d'armures de traction du matériau i, $\sigma_i^Y$ la limite à la rupture du matériau i, $h_c$ la distance maximale à la fibre neutre en flexion de l'armure de traction composite, $a_c$ le rayon moyen de positionnement de ladite armure de traction composite.

Conformément à un mode de réalisation, ledit matériau composite est conçu de manière à conférer auxdites nappes d'armures de traction composites un allongement à la rupture au moins égal à l'allongement à la rupture desdites nappes d'armures de traction métalliques.

De manière avantageuse, ledit matériau composite est un matériau composite à fibres unidirectionnelles.

Selon une mise en œuvre de l'invention, le module d'Young longitudinal dudit matériau composite est inférieur au module d'Young longitudinal dudit matériau métallique.

Avantageusement, ledit jeu circonférentiel entre une armure de traction composite et un moyen de séparation est compris entre 0,5 et 3 mm.

Conformément à une option de réalisation, lesdits moyens de séparation sont réalisés en matériau polymère.

Selon un mode de réalisation, lesdits moyens de séparation sont formés par des bandes de section sensiblement rectangulaire, lesdites bandes desdits moyens de séparation étant disposées entre lesdites armures de traction composites.

Alternativement, lesdits moyens de séparation sont formés par des bandes de section sensiblement en forme de U, lesdites bandes desdits moyens de séparation étant enroulées autour de ladite nappe d'armures de traction métalliques, et une armure de traction composite étant disposée au sein dudit U de chaque moyen de séparation.

Avantageusement, lesdites armures de traction composites ont une section sensiblement circulaire.

De préférence, lesdites armures de traction métalliques ont une section sensiblement rectangulaire.

Selon une caractéristique, l'élément de renfort mécanique comporte un nombre pair de nappes d'armures métalliques et un nombre pair de nappes d'armures composites.

**Présentation succincte des figures**

D'autres caractéristiques et avantages du dispositif selon l'invention, apparaîtront à la lecture de la description ci-après d'exemples non limitatifs de réalisations, en se référant aux figures annexées et décrites ci-après.

La figure 1 illustre schématiquement en perspective une conduite flexible selon l'art antérieur.
La figure 2 illustre une conduite flexible selon un premier mode de réalisation de l'invention.
La figure 3 illustre une conduite flexible selon un deuxième mode de réalisation de l'invention.

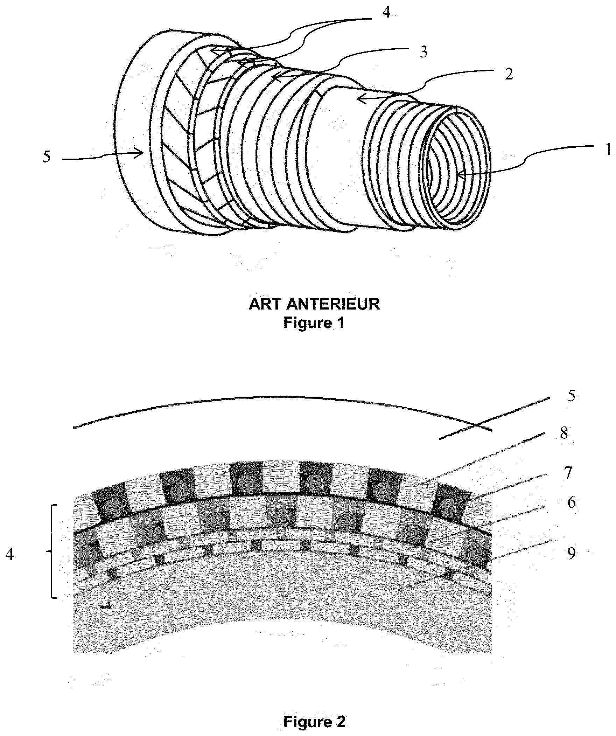

Une conduite flexible selon l'art antérieur est représentée par la figure 1. Cette conduite est constituée de plusieurs couches décrites ci-après de l'intérieur vers l'extérieur de la conduite. La conduite flexible est de type non liée (« unbonded » en anglais) et répond aux spécifications définies dans le document normatif API 17J.

La carcasse interne 1 est constituée d'une bande métallique enroulée selon une hélice à pas court. Elle est destinée à la résistance à l'écrasement sous l'effet de la pression externe appliquée à la conduite.

La gaine interne d'étanchéité 2 est réalisée par extrusion d'un matériau polymère, en général choisi parmi les polyoléfines, les polyamides et les polymères fluorés.

La voûte de pression 3 réalisée en fils métalliques agrafés ou emboîtables assure la résistance à la pression interne dans la conduite.

Selon l'illustration de la figure 1, les nappes d'armures de traction 4 sont constituées par des fils métalliques enroulés en hélice selon des angles dont la valeur absolue par rapport à l'axe longitudinal de la conduite flexible est comprise entre 20 degrés et 55 degrés. La conduite comporte avantageusement deux nappes superposées et croisées d'armures de traction 4, comme représenté sur la figure 1. Par exemple, si la nappe interne d'armures de traction est enroulée avec un angle d'hélice égal à 30 degrés, la nappe externe d'armures de traction est enroulée avec un angle d'hélice égal à -30 degrés. Cette symétrie angulaire permet d'équilibrer la conduite en torsion, de façon à réduire sa tendance à tourner sous l'effet d'un effort de traction.

Lorsque les deux nappes superposées et croisées d'armure de traction 4 sont enroulées avec un angle d'hélice sensiblement égal à 55 degrés, la voûte de pression 3 peut optionnellement être supprimée car l'angle d'hélice de 55 degrés confère aux nappes d'armure de traction 4 une bonne résistance à la pression interne.

La gaine externe d'étanchéité 5 en polymère forme une protection externe de la conduite.

La conduite représentée par la figure 1 est du type "rough bore", c'est-à-dire que le fluide en circulation dans la conduite est en contact avec la carcasse interne 1.

Alternativement, la conduite peut être du type "smooth bore". Dans ce cas, la conduite représentée par la figure 1 ne comporte pas de carcasse interne 1. La gaine polymère 2 est directement en contact avec le fluide en circulation dans la conduite. La gaine polymère 5 est étanche. Les efforts de pression externe sont supportés par la voûte 3.

**Description détaillée de l'invention**

La conduite flexible selon l'invention comporte au moins une gaine de pression et au moins un élément de renfort mécanique. Dans la présente demande, le terme « élément de renfort mécanique » désigne l'ensemble des nappes d'armures (métalliques et composites) utilisées pour reprendre les efforts longitudinaux de la conduite flexible. De plus, la conduite flexible selon l'invention peut avantageusement comporter au moins une des autres couches de la conduite flexible décrites en référence à la figure 1, notamment une carcasse interne, une gaine externe d'étanchéité, une voûte de pression et/ou d'autres couches supplémentaires. De préférence, la conduite flexible selon l'invention est de type non liée (« unbonded » en anglais) et répond aux spécifications définies dans le document normatif API 17J.

Selon l'invention, l'élément de renfort mécanique comporte au moins une nappe d'amures de traction métalliques et au moins une nappe d'armures de traction composites. Au sein de chaque nappe d'armures de traction, les armures de traction (généralement sous forme de fils ou bandes) sont enroulées en hélice autour de la couche située en-dessous. La nappe d'amure composites est disposée à l'extérieur de la nappe d'armure métalliques. Ainsi, la nappe d'armures de traction composites participe à la reprise des charges axiales de tension : il y a un partage des charges axiales entre la nappe d'armures de traction métalliques et la nappe d'armures de traction composites. Par exemple, la nappe d'armures de traction métalliques est utilisée pour la reprise des efforts de compression au fond, dominés par les fortes pressions, et la nappe d'armures de traction composites est utilisée pour compléter la reprise d'effort de tension en tête de la conduite.

La conception d'une conduite flexible comprenant à la fois des armures de traction métalliques et des armures de tractions composites, permet de réduire la section et/ou le nombre de nappe d'armures de traction métalliques. Les matériaux composites étant plus légers que les matériaux métalliques, la masse de la conduite flexible est diminuée par rapport à une conception comprenant uniquement des armures de traction métalliques.

En outre, selon l'invention, des moyens de séparation séparent les armures de traction composites, en maintenant un jeu radial et un jeu circonférentiel. Dans la présente demande, l'expression « jeu radial » désigne la possibilité de mouvement de l'armure de traction composite selon une direction confondue avec le rayon de la conduite flexible, et le jeu radial est dirigé vers l'extérieur à la conduite. En d'autres termes, les armures de traction composites peuvent s'éloigner du centre de la conduite flexible. Dans la présente demande, l'expression « jeu circonférentiel » désigne la possibilité de mouvement de l'armure de traction composite selon une direction périphérique. En d'autres termes, les armures de traction composites peuvent se déplacer selon un arc de cercle dont le centre est l'axe de la conduite flexible.

Les jeux sont permis par la forme et par la disposition des moyens de séparation. En particulier, le jeu radial est permis par la hauteur des moyens de séparation, qui est supérieure à la hauteur des armures de traction composites. Le jeu circonférentiel peut être permis par le fait que les moyens de séparation n'occupent pas la totalité de l'espacement circonférentiel entre deux armures de traction composites consécutives. Ces jeux permettent aux armures de traction composites de se déplacer radialement sous le chargement de compression axiale de la conduite flexible. Ainsi, la nappe d'armures de traction composites est libre de s'étendre radialement de manière à compenser la réduction axiale de la conduite sous l'effet de la pression externe. En conséquence, les contraintes de compression axiale sont minimisées dans les armures de traction composites, les armures de traction composites peuvent donc être utilisées dans des conditions de pressions importantes.

De manière avantageuse, le jeu radial peut être supérieur au jeu circonférentiel, afin de permettre aux armures de traction composites de se déplacer essentiellement radialement.

Dans la présente demande, les termes « armures de traction composites » et « armures composites » ont la même signification et sont utilisés indifféremment. De même, les termes « armures de traction métalliques » et « armures métalliques » ont la même signification et sont utilisés indifféremment.

Conformément à une mise en œuvre de l'invention, des jeux circonférentiels peuvent être prévus entre les armures métalliques, afin d'obtenir une bonne souplesse en flexion.

En revanche, afin de conserver la résistance aux pressions internes et externes, aucun jeu radial n'est prévu pour les armures métalliques. Par exemple, les armures métalliques peuvent être posés sous tension, et une bande de maintien à résistance mécanique élevée renforcée avec des fibres d'aramide peut venir les maintenir radialement. Par exemples, les fibres d'aramide sont choisies parmi les références commerciales Kevlar®, Twaron® ou encore Technora®.

De préférence, l'élément de renfort mécanique comporte un nombre pair de nappes d'armures de traction métalliques et un nombre pair de nappes d'armures de traction composites. Avantageusement, les nappes d'amures de traction d'une paire de nappes sont croisées, en d'autres termes elles sont posées avec des angles d'armage (c'est-à-dire l'angle d'hélice de l'enroulement des armures de traction) de signes opposés. Par exemple, si la nappe interne d'armures de traction est posée avec un angle d'armage (angle d'hélice) égal à 30 degrés, la nappe externe d'armures de traction est enroulée avec un angle d'armage (angle d'hélice) égal à -30 degrés. Cette symétrie angulaire permet d'équilibrer la conduite en torsion, de façon à réduire sa tendance à tourner sous l'effet d'un effort de traction.

Par exemple, l'élément de renfort mécanique peut comprendre de l'intérieur vers l'extérieur deux nappes d'armures de traction métalliques, et deux nappes d'armures de traction composites. Cette conception permet un bon compromis entre la masse de la conduite flexible et la résistance aux pressions interne et externe.

Lors de la fabrication de la conduite flexible, la pose en hélice des armures de traction en matériau composite peut générer une contrainte élastique de flexion. En effet, plus l'angle d'armage (c'est-à-dire l'angle d'hélice de l'enroulement des armures de traction) est élevé, plus la courbure de l'hélice est importante et plus cette contrainte de pose est forte. Afin de limiter la contrainte d'assemblage, il est donc intéressant d'utiliser des angles d'armage faibles pour les nappes d'armures composites par comparaison aux angles couramment utilisés sur les nappes d'armures métalliques. Les angles d'armage des nappes d'armures composites sont donc de préférence inférieurs ou égaux à 25 degrés, préférentiellement compris entre 10 et 25 degrés, pour limiter la contrainte élastique de flexion au sein des armures de traction composites.

Les angles d'armage des nappes d'armure métalliques de la conduite flexible selon une mise en œuvre de l'invention sont, de manière classique, compris entre 25 et 55 degrés, de préférence compris entre 30 et 55 degrés.

Les armures de traction métalliques peuvent être réalisées notamment en acier, par exemple en acier inoxydable, en acier austéno-ferritique (ou acier « Duplex ») ou par exemple à partir d'aciers au carbone faiblement alliés. Les armures de traction métalliques peuvent être aussi des profils tréfilés à froid.

En variante, les armures de traction métalliques sont réalisées en titane ou à partir d'un alliage de titane.

Les armures de traction composites peuvent être réalisées dans une résine thermoplastique ou thermodurcissable contenant des fibres de renfort.

Par exemple, la résine thermoplastique est à base d'une polyoléfine telle que du polyéthylène, à base d'un polyamide tel que du PA11 ou du PA12, ou à base d'un polymère fluoré tel que du polyfluorure de vinylidène (PVDF) ou du perfluoroalkoxy (PFA). En variante, la résine est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone), le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

Par exemple, la résine thermodurcissable est à base d'une résine époxyde (EP), une résine polyester (UP), une résine vinylester (VE), une résine polyuréthanne (PUR) ou encore une résine phénolique (PF).

Les fibres de renfort peuvent être choisies parmi les fibres minérales ou les fibres synthétiques. De préférence, les fibres utilisées sont des fibres de verre et/ou des fibres de carbone. En variante, les fibres de renfort sont des fibres synthétiques telles que des fibres en polyéthylène, en polyester ou polyamide, ou bien des fibres minérales telles que des fibres de basalte.

Par exemple, les armures peuvent être réalisées en matériau composite à fibres unidirectionnelles, obtenu par exemple par pultrusion, comprenant sensiblement 60% de fibres de carbone dans une résine époxyde. Les armures de traction composites peuvent être, par exemple, réalisées avec des fibres de renfort en carbone T700 commercialisées par Toray Carbon Fibers, USA. D'autres fibres de carbone telles que les fibres TR50 commercialisées par Mitsubishi Rayon Co., les fibres UTS50 commercialisées par Teijin ou encore les fibres AS4 commercialisées par Hexcel.

Dans une autre variante de réalisation de l'invention, les armures composites sont des armures de type « cordes » réalisées à partir d'un tressage de plusieurs torons de fibres, les fibres n'étant pas noyées dans une résine thermoplastique ou thermodurcissable. Les fibres utilisées pour réaliser ce type d'armure sont par exemple choisies parmi les fibres synthétiques telles que des fibres en polyéthylène, en polyester, en carbone ou polyamide, ou bien les fibres minérales telles que des fibres de basalte. Les torons sont réalisés à partir de fibres de même nature ou bien à partir d'un mélange de différentes fibres.

Avantageusement, l'utilisation d'armures de type « cordes » permet d'obtenir de bonnes propriétés de résistance mécanique en compression du fait que les fibres ne sont pas contraintes par la présence d'une résine thermoplastiques ou thermodurcissable.

Les moyens de séparation peuvent être réalisés en matériau polymère, par exemple en polymère thermoplastique tel qu'un polyoléfine (PE, PP), un polyamide (PA11, PA12) ou un polymère fluoré (PVDF, PFA), en polymère thermodurcissable tel qu'un polyuréthanne ou encore en élastomèreAinsi, les moyens de séparation sont réalisés dans un matériau léger (plus léger que les armures de traction), qui limite l'augmentation de la masse de la conduite flexible.

Selon un exemple de réalisation de l'invention, les armures de traction métalliques peuvent avoir une section sensiblement rectangulaire. On désigne la section d'une armure de traction, une vue selon une coupe orthogonale à la direction de la longueur de l'armure de traction. De cette manière, il est possible d'utiliser les armures utilisées classiquement.

Alternativement, la section des armures de traction métalliques peut être de toute forme, par exemple circulaire, elliptique, etc.

Selon un exemple de réalisation de l'invention, les armures de traction composites peuvent avoir une section sensiblement circulaire. Ainsi, il est possible d'utiliser des armures de traction de section circulaire peu onéreuses déjà commercialisées pour d'autres applications sous-marines telles que pour les câbles sous-marins, les ombilicaux sous-marins ou encore les tendons d'ancrage de plateforme pétrolière. Par exemple, ce type d'armure est réalisé sous la forme d'un élément de renfort de grande longueur obtenu par pultrusion, comportant des fibres longitudinales en carbone noyées dans une matrice polymérique.

Selon une variante, ce type d'armure peut également se présenter sous la forme d'un noyau réalisé à partir d'un groupement d'éléments de renfort de grande longueur du type de ceux décrit ci-avant, le noyau étant recouvert d'une couche de fibres tressées selon un angle prédéfini pour les maintenir ensemble.

Alternativement, la section des armures de traction composites peut être de toute forme, par exemple rectangulaire, elliptique, etc.

Selon un premier mode de réalisation de l'invention, les moyens de séparation peuvent être formés, par des bandes de section sensiblement rectangulaire. Pour ce mode de réalisation les bandes sont disposées entre les armures de traction composites. En d'autres termes, la nappe d'armures de traction composites est formée d'une alternance d'armures de traction composites et de moyens de séparation. Ce mode de réalisation est simple à réaliser. La hauteur de la section des moyens de séparation peut être supérieure à la hauteur des armures de traction composites, de manière à assurer le jeu radial. De plus, l'épaisseur des moyens de séparation est inférieure à la distance circonférentielle entre deux armures de traction composites consécutives, de manière à assurer le jeu circonférentiel.

Selon un deuxième mode de réalisation de l'invention, les moyens de séparation peuvent être formés par des bandes de section sensiblement en forme de U, le U étant ouvert vers l'extérieur de la conduite flexible. Pour ce mode de réalisation, les bandes des moyens de séparation peuvent être enroulées autour de la nappe d'armures de traction métalliques, et une armure de traction composite est disposée au sein de chaque U des moyens de séparation. En d'autres termes, la nappe d'armures de traction composites est formée d'une suite de moyens de séparation U, au sein desquels sont disposés des armures de traction composites. Ce mode de réalisation est notamment adapté lorsque les pressions de contact entre les nappes d'armures de traction sont élevées. En effet, la forme en U permet une meilleure répartition de l'effort de contact et donc de réduire la pression de contact. La hauteur des branches du U peut assurer le jeu radial, et l'espacement entre les branches du U peut assurer le jeu circonférentiel.

Conformément à une mise en œuvre de l'invention, le jeu circonférentiel entre une armure composite et un moyen de séparation est compris entre 0,5 et 3 mm. Avantageusement, le jeu circonférentiel peut être d'environ 1 mm. Ainsi, l'armure de traction composite peut avoir un déplacement circonférentiel total de 2 mm (1 mm dans chaque direction circonférentielle).

Selon un mode de réalisation de l'invention, une couche intermédiaire peut être prévue entre les nappes acier et composite. Cette couche intermédiaire a pour fonction de bloquer le gonflement de l'armure métallique en compression. Selon un exemple de réalisation, la couche intermédiaire est une bande de maintien à résistance mécanique élevée renforcée avec des fibres d'aramide peut venir les maintenir. Par exemples, les fibres d'aramide sont choisies parmi les références commerciales Kevlar ®, Twaron ® ou encore Technora ®

Avantageusement, des bandes anti-usure peuvent être prévues entre les armures métalliques, afin d'éviter l'usure des armures métalliques.

Selon une caractéristique de l'invention, des rubans de maintien peuvent être prévus entre chaque paire de nappes.

Selon un mode de réalisation de l'invention, les nappes d'armures de traction métalliques sont dimensionnées pour résister aux chargements en pied de conduite flexible (pression externe, courbure), avec les méthodes classiques. La tension en tête de conduite flexible peut être alors estimée à partir du poids propre de la conduite flexible en négligeant la masse des nappes composites - hypothèse vérifiée a posteriori - et de l'effet de fond en cas de pressurisation interne. On suppose que les nappes d'armures de traction métalliques ainsi dimensionnées n'ont pas la capacité suffisante pour reprendre l'intégralité de cette tension notée $F_{TOT}$.

Dans une approche de conception simplifiée, les nappes d'armures composites peuvent être dimensionnées par paire, dite bi-nappes, à angles d'armage opposés, et positionnées à un rayon moyen $a_c$ déduit du rayon des nappes d'armures de traction métalliques.

Le calcul de la section totale des armures composite nécessaires se base sur le principe d'un partage des charges axiales entre les nappes d'armures. Les efforts $F_a$ et $F_c$ dans les bi-nappes métallique et composite sont proportionnels à leurs raideurs axiales respectives $K_a$ et $K_c$, selon l'allongement global $\dfrac{\Delta L}{L_0}$ de la conduite :

$$\frac{\Delta L}{L_0} = \frac{F_{TOT}}{K_a + K_c} = \frac{F_c}{K_c} = \frac{F_a}{K_a} \qquad \text{Eq. 1}$$

Les raideurs axiales dépendent de la géométrie de la bi-nappe et du module de Young du matériau :

$$K_i = E_i . n_i . S_i . \cos^3 \alpha_i \qquad \text{Eq. 2}$$

avec :

i l'indice associé à la bi-nappe (i=a pour métal, i=c pour le composite),

E le module de Young longitudinal du matériau,
n le nombre de fil d'armure,
S la section d'un fil d'armure,
$\alpha_i$ l'angle d'armage.

Les efforts axiaux dans chaque bi-nappe sont fonction de la contrainte de traction $\sigma_i^t$ dans chaque fil d'armure et de la géométrie de la bi-nappe :

$$F_i = \sigma_i^t . n_i . S_i . \cos(\alpha_i) \qquad \text{Eq. 3}$$

En injectant les équations 2 et 3 dans l'équation Eq. 11 pour chaque bi-nappe, on obtient une relation entre la contrainte dans les fils et la raideur de la bi-nappe d'armures composites.

$$\frac{F_{TOT}}{K_a + K_c} = \frac{\sigma_a^t}{E_a . \cos^2 \alpha_a} = \frac{\sigma_c^t}{E_c . \cos^2 \alpha_c} \qquad \text{Eq. 4}$$

Les contraintes dans les fils doivent respecter un critère de résistance du matériau. Dans les fils d'acier, la contrainte de traction $\sigma_a^t$ doit rester inférieure à la limite d'élasticité $\sigma_a^Y$ du métal pondérée d'un facteur de sécurité $sf_a$ strictement inférieur à 1 :

$$\sigma_a^t < sf_a . \sigma_a^Y \qquad \text{Eq. 5}$$

Dans les armures de traction composites, la somme de la contrainte de traction $\sigma_c^t$ et de la contrainte de flexion

$\sigma_c^b$ à la pose doit rester inférieure à la limite de rupture en traction $\sigma_c^Y$ du composite pondérée d'un facteur de sécurité $sf_c$ strictement inférieur à 1 :

$$\sigma_c^t + \sigma_c^b < sf_c . \sigma_c^Y \qquad \text{Eq. 6}$$

où

$$\sigma_c^b = E_c . \frac{h_c}{a_c} \sin^2 \alpha_c \qquad \text{Eq. 7}$$

avec

$a_c$ le rayon moyen de la bi-nappe d'armures composite,
$h_c$ la distance maximale à la fibre neutre en flexion de l'armure de traction composite (égale au rayon $r_c$ de l'armure de traction composite dans le cas d'une armure de traction composite de section circulaire).

La contrainte dans les fils d'armures est extraite de l'expression 4 puis injectée dans les critères matériaux exprimés dans les équations 5 et 6. Pour les fils d'armures métalliques :

$$\frac{F_{TOT}}{K_a + K_c} E_a . \cos^2 \alpha_a < sf_a . \sigma_a^Y \qquad \text{Eq. 8}$$

Pour les armures composites :

$$\frac{F_{TOT}}{K_a + K_c} E_c . \cos^2 \alpha_c + \sigma_c^b < sf_c . \sigma_c^Y \qquad \text{Eq. 9}$$

On obtient donc une valeur minimale à respecter pour la raideur de la bi-nappe d'armures composites :

$$K_c > \max \left\{ F_{TOT} . \frac{E_a . \cos^2 \alpha_a}{sf_a . \sigma_a^Y} - K_a \; ; \; F_{TOT} . \frac{E_c . \cos^2 \alpha_c}{sf_c . \sigma_c^Y - \sigma_c^b} - K_a \right\} \qquad \text{Eq. 10}$$

Selon un mode de réalisation de l'invention, pour un angle d'armage $\alpha_c$ choisi (préférentiellement dans la plage indiquée précédemment, c'est-à-dire inférieur ou égale à 25 degrés) et un matériau composite donné, on en déduit le nombre de d'armures composite $n_c$ optimal à utiliser dans la bi-nappe d'armures composite en fonction de la section $S_c$ d'une armure :

$$n_c > \frac{1}{S_c} . \frac{1}{E_c . \cos^3 \alpha_c} . \max \left\{ F_{TOT} . \frac{E_a . \cos^2 \alpha_a}{sf_a . \sigma_a^Y} - K_a \; ; \; F_{TOT} . \frac{E_c . \cos^2 \alpha_c}{sf_c . \sigma_c^Y - E_c . \frac{h_c}{a_c} \sin^2 \alpha_c} - K_a \right\} \qquad \text{Eq. 11}$$

Pour différentes sections d'armures de traction composites disponibles, on peut vérifier que le nombre d'armures de traction est compatible avec la place laissée disponible sur le périmètre de la nappe après mise en place d'un nombre identique des moyens de séparation et ménagement d'un jeu circonférentiel prédéterminé (par exemple un jeu circonférentiel d'environ 1 mm) entre les moyens de séparation et les armures de traction composites. Il existe potentiellement plusieurs couples $(n_c, S_c)$ solutions. Idéalement, on souhaite des moyens de séparation larges pour assurer une bonne stabilité de l'assemblage.

La compression dans les nappes d'armures composites peut être évitée en permettant aux armures composites de maintenir une longueur constante. La contraction axiale est compensée par un déplacement radial autorisé grâce à un jeu radial au-dessus des armures composites, maintenu par les moyens de séparation. Connaissant la raideur axiale en compression de la conduite flexible, conférée par les nappes aciers, il est possible d'estimer le taux de contraction axiale $\frac{\Delta L}{L_0}$ de la conduite sous le chargement de pression externe. Le déplacement radial $\Delta a$ est estimé géométriquement par conservation de la longueur de l'armure composite sur un pas d'hélice :

$$\Delta a = a_c \cdot \left( \sqrt{1 - \frac{1 - \left(1 + \frac{\Delta L}{L_0}\right)^2}{\tan^2 \alpha_c}} - 1 \right) \qquad \text{Eq. 12}$$

avec $a_c$ le rayon moyen de ladite armure de traction composite, $\frac{\Delta Lz}{L_0}$ le taux de contraction de ladite conduite sous le chargement de la pression externe, et $\alpha_c$ l'angle d'armage desdites armures de traction composites.

Ainsi, le jeu radial $J_r$, et a fortiori la hauteur des moyens de séparation, peut être déterminé au moyen d'une équation du type : Par conséquent,

$$J_r \geq \Delta a$$

$$J_r \geq a_c \cdot \left( \sqrt{1 - \frac{1 - \left(1 + \frac{\Delta L}{L_0}\right)^2}{\tan^2 \alpha_c}} - 1 \right)$$

avec $a_c$ le rayon moyen de ladite armure de traction composite, $\frac{\Delta L}{L_0}$ le taux de contraction de ladite conduite sous le chargement de la pression externe, et $\alpha_c$ l'angle d'armage desdites armures de traction composites.

Il est également souhaitable que le matériau composite choisi confère aux nappes d'armures composites un allongement à la rupture au moins égal à l'allongement à la rupture des nappes d'armures métalliques. A partir des équations précédentes, ce critère sur les allongements à rupture des nappes s'écrit :

$$sf_c \cdot \frac{\sigma_c^Y}{E_c} \cdot \frac{1}{\cos(\alpha_c)^2} - \frac{r_c}{a_c} \cdot \tan(\alpha_c)^2 \geq sf_a \cdot \frac{\sigma_a^Y}{E_a} \cdot \frac{1}{\cos(\alpha_a)^2} \qquad \text{Eq. 13}$$

On en déduit un allongement à rupture optimal pour le matériau composite :

$$\left. \frac{\sigma_c^Y}{E_c} \right|_{optim} = \frac{\cos(\alpha_c)^2}{sf_c} \left[ sf_a \cdot \frac{\sigma_a^Y}{E_a} \cdot \frac{1}{\cos(\alpha_a)^2} + \frac{r_c}{a_c} \cdot \tan(\alpha_c)^2 \right] \qquad \text{Eq. 14}$$

Conformément à un mode de réalisation de l'invention, le matériau composite des armures composites peut être choisi de manière à vérifier un critère de choix portant sur son allongement à rupture, qui doit être idéalement égal à l'allongement optimal,

$$\left. \frac{\sigma_c^Y}{E_c} \right|_{optim} \leq \frac{\sigma_c^Y}{E_c} \qquad \text{Eq. 15}$$

La figure 2 représente, schématiquement et de manière non limitative, une conduite flexible selon le premier mode de réalisation de l'invention. La figure 2 est une section transversale partielle d'une conduite flexible. La conduite flexible comporte du centre vers l'extérieur une structure interne 9, des nappes d'armures de traction 4 et une gaine externe 5. La structure interne peut être de tout type, et peut notamment comprendre au moins une des couches illustrées sur la figure 1 (carcasse, gaine de pression, voûte de pression, etc.). Les nappes d'armures de traction 4 comportent deux nappes d'armures métalliques 6 et deux nappes d'armures composites 7. Les deux nappes d'armures métalliques 6 sont disposées avec des angles d'armage opposés. De même, les deux nappes d'armures composites 7 sont disposées avec des angles d'armage opposés. Les armures métalliques 6 ont une section sensiblement rectangulaire. Les armures composites 6 ont une section sensiblement circulaire. En outre, les nappes d'armures 4 comportent des moyens de séparation 8. Selon le mode de réalisation illustré, les moyens de séparation 8 sont formés, par des bandes de section sensiblement rectangulaire. Pour ce mode de réalisation, les bandes des moyens de séparation 8 sont disposées entre les armures de traction composites 7. En d'autres termes, la nappe d'armures de traction composites 7 est formée d'une alternance d'armures de traction composites 7 et de moyens de séparation 8. La hauteur de la section des moyens de séparation 8 est supérieure à la hauteur des armures de traction composites 7, de manière à maintenir un jeu radial. De plus, l'épaisseur des moyens de séparation 8 est inférieure à la distance circonférentielle entre deux armures de traction composites consécutives 7.

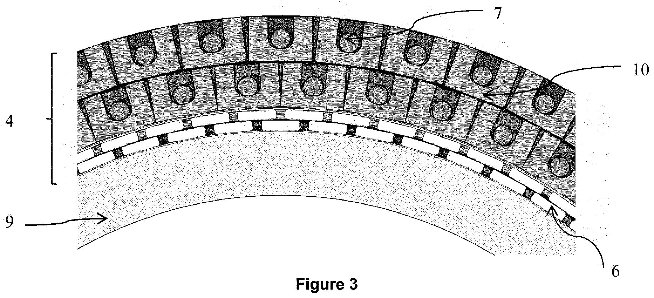

La figure 3 représente, schématiquement et de manière non limitative, une conduite flexible selon le deuxième mode de réalisation de l'invention. La figure 3 est une section transversale partielle d'une conduite flexible. La conduite flexible comporte du centre vers l'extérieur une structure interne 9, des nappes d'armures de traction 4 et une gaine externe (non représentée). La structure interne peut être de tout type, et notamment comprendre au moins une des couches illustrées sur la figure 1 (carcasse, gaine de pression, voûte de pression, etc.). Les nappes d'armures de traction 4 comportent deux nappes d'armures métalliques 6 et deux nappes d'armures composites 7. Les deux nappes d'armures métalliques 6 sont disposées avec des angles d'armage opposés. De même, les deux nappes d'armures composites 7 sont disposées avec des angles d'armage opposés. Les armures métalliques 6 ont une section sensiblement rectangulaire. Les armures composites 6 ont une section sensiblement circulaire. En outre, les nappes d'armures 4 comportent des moyens de séparation 10. Selon le mode de réalisation illustré, les moyens de séparation 10 sont formés par des bandes de section sensiblement en forme de U, le U étant ouvert vers l'extérieur de la conduite flexible. Pour ce mode de réalisation, les bandes des moyens de séparation 10 sont enroulées autour de la nappe d'armures de traction métalliques 6, et une armure de traction composite 7 est disposée au sein de chaque U des moyens de séparation 10. En d'autres termes, la nappe d'armures de traction composites 7 est formée d'une suite de moyens de séparation 10 en U, au sein desquels sont disposés des armures de traction composites 7. La hauteur des branches du U des moyens de séparation 10 assure le jeu radial, et l'espacement entre les branches du U des moyens de séparation 10 assure le jeu circonférentiel.

La présente invention est adaptée pour les conduites flexibles de type « riser » et pour les conduites flexibles de type « flowline ».

L'invention est particulièrement adaptée à une conduite flexible pour les grandes profondeurs, pour laquelle la tension en tête de la conduite est le chargement le plus sévère pour le dimensionnement des armures.

Exemple d'application

Les caractéristiques et avantages de la conduite flexible selon l'invention apparaîtront plus clairement à la lecture de l'exemple d'application ci-après.

Cet exemple d'application concerne une conduite flexible de type flowline pour 2500m de profondeur d'eau dont le chargement dimensionnant pour les armures est la tension en tête à l'installation, avec un chargement extrême en tête à l'installation de 4300kN, correspondant au poids propre affecté d'un coefficient 1.25. Pour la solution actuelle (selon l'art antérieur), l'élément de renfort mécanique est constitué de :

• deux nappes d'armures en acier au carbone présentant une haute résistance mécanique supérieure ou égale à 1200 MPa de respectivement 64 et 66 fils de section $14 \times 6$ mm$^2$ armées à 25 degrés.

Grâce à la conception de la conduite flexible selon l'invention, il est possible de dimensionner la section d'acier pour les chargements en fond uniquement, c'est-à-dire la pression externe et flambage. Pour le même chargement extrême défini ci-dessus, on peut dimensionner une conduite flexible selon l'invention avec un élément de renfort mécanique constitué de :

• deux nappes d'armures en acier au carbone présentant une haute résistance mécanique supérieure ou égale à 1200 MPa de respectivement 64 et 66 fils de section $12 \times 3$ mm$^2$ armées à 25 degrés,
• deux nappes d'armures composites de respectivement 50 et 52 fils de diamètre 6 mm espacés avec un nombre identique de moyens de séparation de section $11 \times 9.6$ mm$^2$, armées à 15 degrés, de plus :

• les armures composites sont en composite à 60% de fibres de carbone (type T700 de Toray) dans une résine époxyde,

- les moyens de séparation sont en polypropylène PP (type ELTEX® TUB350 de Solvay Plastics).

Cette conception est réalisée selon le mode de réalisation de la figure 2, avec des moyens de séparation ayant une section sensiblement rectangulaire, et avec deux nappes d'armures métalliques et deux nappes d'amures composites. Entre les deux conceptions (solution actuelle, et solution selon l'invention), les autres caractéristiques de la conduite flexible (par exemple matériaux, designs, dimensions des gaines, de la carcasse, de la voûte de pression, etc.) ne sont pas modifiées.

Le calcul des raideurs axiales des nappes indique un partage de charges axiales de 70% dans les armures aciers et 30% dans les armures composites.

Le gain de poids est de 52 kg/m dans l'air, 45 kg/m dans l'eau conduite pleine. Ce gain de poids est permis car la section des nappes d'armures en acier a été divisé par deux par rapport à la solution actuelle selon l'art antérieur.

Ainsi, la conception des nappes d'armures d'une conduite flexible selon l'invention permet une diminution significative de la masse de la conduite flexible, tout en conservant une flexibilité, et une résistance mécanique aux chargements en pressions internes et externes. Sa flexibilité étant conservée, il est possible d'enrouler la conduite flexible sur une bobine de stockage avec un rayon d'enroulement similaire à celui d'une conduite flexible classique sans nappes d'armures composites.

**Revendications**

1. Conduite flexible pour transporter un effluent pétrolier, ladite conduite comportant au moins un élément de renfort mécanique (4) et une gaine de pression (2), ledit élément de renfort mécanique (4) étant disposé à l'extérieur de ladite gaine de pression, ledit élément de renfort mécanique comprenant au moins une nappe d'armures de traction métalliques (6) et au moins une nappe d'armures de traction composites (7), ladite nappe d'amures de traction composites (7) étant disposée à l'extérieur de ladite nappe d'armures de traction métalliques (6), **caractérisée en ce que** des moyens de séparation (8 ; 10) séparent lesdites armures de traction composites (7), lesdits moyens de séparation (8 ; 10) assurant un jeu radial et un jeu circonférentiel pour lesdites armures de traction composites (7).

2. Conduite selon la revendication 1, dans laquelle ledit jeu radial $J_r$ desdites armures de traction composites (7) est

$$J_r \geq a_c \cdot \left( \sqrt{1 - \frac{1 - \left(1 + \frac{\Delta L}{L_0}\right)^2}{\tan^2 \alpha_c}} - 1 \right)$$

déterminé au fonction d'une équation du type : avec $a_c$ le rayon moyen de ladite armure de traction composite (7), $\frac{\Delta L}{L_0}$ le taux de contraction de ladite conduite sous le chargement de la pression externe, et $\alpha_c$ l'angle d'armage desdites armures de traction composites (7).

3. Conduite selon l'une des revendications précédentes, dans laquelle l'angle d'armage de ladite nappe d'armures de traction composites (7) est inférieur ou égal à 25 degrés, de préférence compris entre 10 et 25 degrés.

4. Conduite selon l'une des revendications précédentes, dans laquelle l'angle d'armage de ladite nappe d'armures de traction métalliques (6) est compris entre 25 et 55 degrés, de préférence compris entre 30 et 55 degrés.

5. Conduite selon l'une des revendications précédentes, dans laquelle lesdites armures de traction composites (7) sont dimensionnées pour un partage des charges axiales entre lesdites nappes d'armures métalliques (6) et composites (7).

6. Conduite selon l'une des revendications précédentes, dans laquelle le nombre d'armures de traction composites (7) constituant ladite nappe d'armures de traction composites est contraint par la section, l'angle d'armage et le matériau desdites armures de traction composites (7), ainsi que par le nombre, la section, l'angle d'armage et le matériau desdites armures de traction métalliques (6).

7. Conduite selon l'une des revendications précédentes, dans laquelle le nombre $n_c$ d'armures de traction composites (7) constituant ladite nappe d'amures de traction composites est défini par une formule du type :

$$n_c > \frac{1}{S_c} \cdot \frac{1}{E_c . \cos^3 \alpha_c} \cdot \max \left\{ F_{TOT} . \frac{E_a . \cos^2 \alpha_a}{sf_a . \sigma_a^Y} - K_a \; ; \; F_{TOT} . \frac{E_c . \cos^2 \alpha_c}{sf_c . \sigma_c^Y - E_c . \frac{h_c}{a_c} \sin^2 \alpha_c} - K_a \right\}$$

avec $K_i = E_i . n_i . S_i . \cos^3 \alpha_i$, i étant l'indice associé à la nappe d'armures de traction considérée : i correspondant à a pour métallique ou c pour composite, $E_i$ le module d'Young du matériau i, $S_i$ la section de l'armure de traction du matériau i, $\alpha_i$ l'angle d'armage de l'armure de traction du matériau i, $F_{TOT}$ l'effort axial total vu par la conduite, $sf_i$ un facteur de sécurité pour la nappe d'armures de traction du matériau i, $\sigma_i^Y$ la limite à la rupture du matériau i, $h_c$ la distance maximale à la fibre neutre en flexion de l'armure de traction composite, $a_c$ le rayon moyen de positionnement de ladite armure de traction composite.

**8.** Conduite selon l'une des revendications précédentes, dans laquelle ledit matériau composite est conçu de manière à conférer auxdites nappes d'armures de traction composites (7) un allongement à la rupture au moins égal à l'allongement à la rupture desdites nappes d'armures de traction métalliques (6).

**9.** Conduite selon l'une des revendications précédentes, dans laquelle ledit matériau composite est un matériau composite à fibres unidirectionnelles.

**10.** Conduite selon l'une des revendications précédentes, dans laquelle le module d'Young longitudinal dudit matériau composite est inférieur au module d'Young longitudinal dudit matériau métallique.

**11.** Conduite selon l'une des revendications précédentes, dans laquelle ledit jeu circonférentiel entre une armure de traction composite (7) et un moyen de séparation (8 ; 10) est compris entre 0,5 et 3 mm.

**12.** Conduite selon l'une des revendications précédentes, dans laquelle lesdits moyens de séparation (8 ; 10) sont réalisés en matériau polymère.

**13.** Conduite selon l'une des revendications précédentes, dans laquelle lesdits moyens de séparation (8) sont formés par des bandes de section sensiblement rectangulaire, lesdites bandes desdits moyens de séparation (8) étant disposées entre lesdites armures de traction composites (7).

**14.** Conduite selon l'une des revendications précédentes, dans laquelle lesdits moyens de séparation (10) sont formés par des bandes de section sensiblement en forme de U, lesdites bandes desdits moyens de séparation (10) étant enroulées autour de ladite nappe d'armures de traction métalliques (6), et une armure de traction composite (7) étant disposée au sein dudit U de chaque moyen de séparation (10).

**15.** Conduite selon l'une des revendications précédentes, dans laquelle lesdites armures de traction composites (7) ont une section sensiblement circulaire.

**16.** Conduite selon l'une des revendications précédentes, dans laquelle lesdites armures de traction métalliques (6) ont une section sensiblement rectangulaire.

**17.** Conduite selon l'une des revendications précédentes, dans laquelle l'élément de renfort mécanique comporte un nombre pair de nappes d'armures métalliques (6) et un nombre pair de nappes d'armures composites (7).

**Patentansprüche**

**1.** Flexibles Rohr für den Transport eines Erdölprodukts, wobei das Rohr mindestens ein mechanisches Verstärkungselement (4) und einen Druckmantel (2) umfasst, wobei das mechanische Verstärkungselement (4) auf der Außenseite des Druckmantels angeordnet ist, wobei das mechanische Verstärkungselement mindestens eine Schicht aus Zugarmierungen aus Metall (6) und mindestens eine Schicht aus Zugarmierungen aus Verbundmaterial (7) beinhaltet, wobei die Schicht aus Zugarmierungen aus Verbundmaterial (7) auf der Außenseite der Schicht aus Zugarmierungen aus Metall (6) angeordnet ist, **dadurch gekennzeichnet, dass** Trennmittel (8; 10) die Zugarmierungen aus Verbundmaterial (7) trennen, wobei die Trennmittel (8; 10) ein radiales Spiel und ein Umfangsspiel für die Zugarmierungen aus Verbundmaterial (7) gewährleisten.

2. Rohr nach Anspruch 1, wobei das radiale Spiel $J_r$ der Zugarmierungen aus Verbundmaterial (7) gemäß einer Glei-

$$J_r \geq a_c \cdot \left( \sqrt{1 - \frac{1 - \left(1 + \frac{\Delta L}{L_0}\right)^2}{tan^2 \alpha_c}} - 1 \right)$$

chung des folgenden Typs bestimmt wird:                                      , wobei $\alpha_c$ der mittlere Radius der Zugarmierung aus Verbundmaterial (7) ist, $\frac{\Delta L}{L_0}$ das Kontraktionsverhältnis des Rohrs unter Einwirkung des Außendrucks ist und $\alpha_c$ der Armierungswinkel der Zugarmierungen aus Verbundmaterial (7) ist.

3. Rohr nach einem der vorhergehenden Ansprüche, wobei der Armierungswinkel der Schicht aus Zugarmierungen aus Verbundmaterial (7) kleiner als oder gleich 25 Grad ist und vorzugsweise zwischen 10 und 25 Grad liegt.

4. Rohr nach einem der vorhergehenden Ansprüche, wobei der Armierungswinkel der Schicht aus Zugarmierungen aus Metall (6) zwischen 25 und 55 Grad und vorzugsweise zwischen 30 und 55 Grad liegt.

5. Rohr nach einem der vorhergehenden Ansprüche, wobei die Zugarmierungen aus Verbundmaterial (7) für eine Verteilung der axialen Lasten auf die Schichten aus Armierungen aus Metall (6) und Verbundmaterial (7) ausgelegt sind.

6. Rohr nach einem der vorhergehenden Ansprüche, wobei die Anzahl von Zugarmierungen aus Verbundmaterial (7), aus denen die Schicht aus Zugarmierungen aus Verbundmaterial besteht, durch den Querschnitt, den Armierungswinkel und das Material der Zugarmierungen aus Verbundmaterial (7) sowie durch die Anzahl, den Querschnitt, den Armierungswinkel und das Material der Zugarmierungen aus Metall (6) bedingt ist.

7. Rohr nach einem der vorhergehenden Ansprüche, wobei die Anzahl $n_c$ von Zugarmierungen aus Verbundmaterial (7), aus denen die Schicht aus Zugarmierungen aus Verbundmaterial besteht, durch eine Formel des folgenden Typs definiert wird:

$$n_c > \frac{1}{S_c} \cdot \frac{1}{E_c \cdot cos^3 \alpha_c} \cdot max \left\{ F_{TOT} \cdot \frac{E_a \cdot cos^2 \alpha_a}{sf_a \cdot \sigma_a^Y} - K_a; \ F_{TOT} \cdot \frac{E_c \cdot cos^2 \alpha_c}{sf_c \cdot \sigma_c^Y - E_c \cdot \frac{h_c}{a_c} sin^2 \alpha_c} - K_a \right\} \quad ,$$

mit $K_i = E_i \cdot n_i \cdot S_i \cdot cos^3 \alpha_i$, wobei i der mit der betrachteten Schicht aus Zugarmierungen assoziierte Index ist: wobei i bei Metall a entspricht oder bei Verbundmaterial c entspricht, $E_i$ der Elastizitätsmodul des Materials i ist, $S_i$ der Querschnitt der Zugarmierung des Materials i ist, $\alpha_i$ der Armierungswinkel der Zugarmierung des Materials i ist, $F_{TOT}$ die gesamte axiale Kraft ist, die auf das Rohr ausgeübt wird, $sf_i$ ein Sicherheitsfaktor für die Schicht aus Zugarmierungen aus dem Material i ist, $\sigma_i^Y$ die Bruchgrenze des Materials i ist, $h_c$ der maximale Abstand zur neutralen Biegefaser der Zugarmierung aus Verbundmaterial ist, $\alpha_c$ der mittlere Positionierungsradius der Zugarmierung aus Verbundmaterial ist.

8. Rohr nach einem der vorhergehenden Ansprüche, wobei das Verbundmaterial so konzipiert ist, dass es den Schichten aus Zugarmierungen aus Verbundmaterial (7) eine Bruchdehnung verleiht, die mindestens gleich der Bruchdehnung der Schichten aus Zugarmierungen aus Metall (6) ist.

9. Rohr nach einem der vorhergehenden Ansprüche, wobei das Verbundmaterial ein Verbundmaterial mit unidirektionalen Fasern ist.

10. Rohr nach einem der vorhergehenden Ansprüche, wobei der Elastizitätsmodul in Längsrichtung des Verbundmaterials kleiner als der Elastizitätsmodul in Längsrichtung des Materials aus Metall ist.

**11.** Rohr nach einem der vorhergehenden Ansprüche, wobei das Umfangsspiel zwischen einer Zugarmierung aus Verbundmaterial (7) und einem Trennmittel (8; 10) zwischen 0,5 und 3 mm liegt.

**12.** Rohr nach einem der vorhergehenden Ansprüche, wobei die Trennmittel (8; 10) aus Polymermaterial hergestellt sind.

**13.** Rohr nach einem der vorhergehenden Ansprüche, wobei die Trennmittel (8) aus Bändern mit einem im Wesentlichen rechteckigen Querschnitt gebildet sind, wobei die Bänder der Trennmittel (8) zwischen den Zugarmierungen aus Verbundmaterial (7) angeordnet sind.

**14.** Rohr nach einem der vorhergehenden Ansprüche, wobei die Trennmittel (10) aus Bändern mit einem im Wesentlichen U-förmigen Querschnitt gebildet sind, wobei die Bänder der Trennmittel (10) um die Schicht aus Zugarmierungen aus Metall (6) gewickelt sind und eine Zugarmierung aus Verbundmaterial (7) innerhalb des Us jedes Trennmittels (10) angeordnet ist.

**15.** Rohr nach einem der vorhergehenden Ansprüche, wobei die Zugarmierungen aus Verbundmaterial (7) einen im Wesentlichen kreisförmigen Querschnitt aufweisen.

**16.** Rohr nach einem der vorhergehenden Ansprüche, wobei die Zugarmierungen aus Metall (6) einen im Wesentlichen rechteckigen Querschnitt aufweisen.

**17.** Rohr nach einem der vorhergehenden Ansprüche, wobei das mechanische Verstärkungselement eine gerade Anzahl an Schichten aus Armierungen aus Metall (6) und eine gerade Anzahl an Schichten aus Armierungen aus Verbundmaterial (7) umfasst.

## Claims

**1.** Flexible pipe for transporting a petroleum effluent, said pipe comprising at least one mechanical reinforcement element (4) and a pressure sheath (2), said mechanical reinforcement element (4) being disposed outside of said pressure sheath, said mechanical reinforcement element comprising at least one metal tensile armour layer (6) and at least one composite tensile armour layer (7), said composite tensile armour layer (7) being disposed outside of said metal tensile armour layer (6), **characterized in that** separation means (8; 10) separate said composite tensile armours (7), said separation means (8; 10) ensuring a radial play and a circumferential play for said composite tensile armours (7).

**2.** Pipe according to Claim 1, wherein said radial play $J_r$ of said composite tensile armours (7) is determined according

$$J_r \geq a_c \cdot \left( \sqrt{1 - \frac{1 - \left(1 + \frac{\Delta L}{L_0}\right)^2}{\tan^2 \alpha_c}} - 1 \right)$$

to an equation of the type: with $a_c$ the average radius of said composite tensile armour (7), $\frac{\Delta L}{L_0}$ the contraction ratio of said pipe under the loading of the external pressure, and $a_c$ the lay angle of said composite tensile armours (7).

**3.** Pipe according to one of the preceding claims, wherein the lay angle of said composite tensile armour layer (7) is less than or equal to 25 degrees, preferably between 10 and 25 degrees.

**4.** Pipe according to one of the preceding claims, wherein the lay angle of said metal tensile armour layer (6) is between 25 and 55 degrees, preferably between 30 and 55 degrees.

**5.** Pipe according to one of the preceding claims, wherein said composite tensile armours (7) are dimensioned for a sharing of the axial loads between said metal (6) and composite (7) armour layers.

**6.** Pipe according to one of the preceding claims, wherein the number of composite tensile armours (7) forming said composite tensile armour layer is dictated by the section, the lay angle and the material of said composite tensile armours (7) and by the number, the section, the lay angle and the material of said metal tensile armours (6).

7. Pipe according to one of the preceding claims, wherein the number $n_c$ of composite tensile armours (7) forming said composite tensile armour layer is defined by a formula of the type:

$$n_c > \frac{1}{S_c} \cdot \frac{1}{E_c.\cos^3 \alpha_c} \cdot \max \left\{ F_{TOT} \cdot \frac{E_a.\cos^2 \alpha_a}{sf_a.\sigma_a^Y} - K_a \; ; \; F_{TOT} \cdot \frac{E_c.\cos^2 \alpha_c}{sf_c.\sigma_c^Y - E_c.\frac{h_c}{a_c}\sin^2 \alpha_c} - K_a \right\}$$

with $K_i = E_i.n_i.S_i.\cos^3\alpha_i$, i being the index associated with the tensile armour layer considered: i corresponding to a for metal and c for composite, $E_i$ the Young's modulus of the material i, $S_i$ the section of the tensile armour of the material i, $\alpha_i$ the lay angle of the tensile armour of the material i, $F_{TOT}$ the total axial load to which the pipe is subjected, $sf_i$ a safety factor for the tensile armour layer of the material i, $\sigma_i^Y$ the ultimate strength of the material i, $h_c$ the maximum distance to the neutral fibre in bending of the composite tensile armour, $a_c$ the average radius of positioning of said composite tensile armour.

8. Pipe according to one of the preceding claims, wherein said composite material is designed so as to confer on said composite tensile armour layers (7) an elongation at break at least equal to the elongation at break of said metal tensile armour layers (6).

9. Pipe according to one of the preceding claims, wherein said composite material is a composite material with unidirectional fibres.

10. Pipe according to one of the preceding claims, wherein the longitudinal Young's modulus of said composite material is less than the longitudinal Young's modulus of said metal material.

11. Pipe according to one of the preceding claims, wherein said circumferential play between a composite tensile armour (7) and a separation means (8; 10) is between 0.5 and 3 mm.

12. Pipe according to one of the preceding claims, wherein said separation means (8; 10) are made of polymer material.

13. Pipe according to one of the preceding claims, wherein said separation means (8) are formed by strips of substantially rectangular section, said strips of said separation means (8) being disposed between said composite tensile armours (7).

14. Pipe according to one of the preceding claims, wherein said separation means (10) are formed by strips of substantially U-shaped section, said strips of said separation means (10) being wound around said metal tensile armour layer (6) and a composite tensile armour (7) being disposed within said U of each separation means (10).

15. Pipe according to one of the preceding claims, wherein said composite tensile armours (7) have a substantially circular section.

16. Pipe according to one of the preceding claims, wherein said metal tensile armours (6) have a substantially rectangular section.

17. Pipe according to one of the preceding claims, wherein the mechanical reinforcement element comprises an even number of metal armour layers (6) and an even number of composite armour layers (7).

**ART ANTERIEUR**
**Figure 1**

**Figure 2**

**Figure 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012006998 A
- EP 1459003 A
- US 2015027580 A1